(19) Europäisches Patentamt / European Patent Office / Office européen des brevets

(11) **EP 3 073 460 A1**

(12) **EUROPEAN PATENT APPLICATION**

(43) Date of publication:
**28.09.2016 Bulletin 2016/39**

(51) Int Cl.:
**G08G 1/01** (2006.01)　　　**H04W 4/04** (2009.01)

(21) Application number: **15305428.3**

(22) Date of filing: **24.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ALCATEL LUCENT**
**92100 Boulogne-Billancourt (FR)**

(72) Inventors:
• **Valentin, Stefan**
　**92130 Issy les Moulineaux (FR)**
• **Qi, Liao**
　**70565 Stuttgart (DE)**

(74) Representative: **Huber, Meik et al**
**Alcatel-Lucent Deutschland AG**
**Intellectual Property Business Group**
**Lorenzstraße 10**
**70435 Stuttgart (DE)**

(54) **PREDICTING THE TRAJECTORY OF MOBILE USERS**

(57)　The present invention concerns a method and apparatus for predicting trajectories of mobile users. Road maps are converted to a network graph. Historical data about the movements of a user is collected and support information is collected. The movement of the user is predicted based on the collected information.

## Fig. 3

**Description**

FIELD OF THE INVENTION

The present invention relates to a method and apparatus for predicting the trajectories of a mobile user.

BACKGROUND OF THE INVENTION

This section introduces aspects that may be helpful in facilitating a better understanding of the invention. Accordingly, the statements of this section are to be read in this light and are not to be understood as admission about what is in the prior art.

In wireless telecommunication networks, accurate prediction of user trajectory, i.e. the movement of a User Equipment, is important for proactive optimization of network parameters, user experience and location based services. The user trajectory is defined as a sequence of geographical coordinates furnished with corresponding time stamps.

Individual human mobility follows certain patterns which are correlated in time. Up to a certain degree, it is possible to learn and to predict the user trajectory from partially repeated patterns. On the other hand, human behavior and environmental changes such as traffic conditions are to a certain extend random and hard to predict. Thus, the prediction of individual human movements, i.e. user trajectory, is a difficult and complex task.

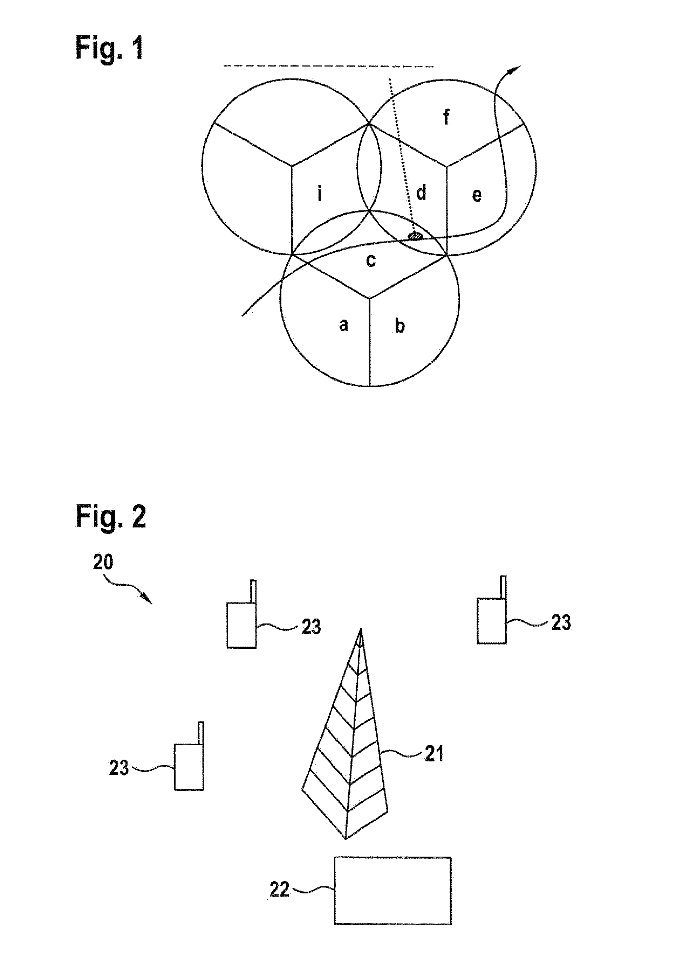

One approach to predict human mobility patterns uses state space methods to predict the next location. A trace is decomposed in order to fit the state space model. Due to the continuity of a user trajectory, the following two ways for decomposing a trace are used. The base station (BS) is used to characterize a region and to define a user trajectory as a sequence of base station IDs. This is indicated in Fig. 1, where a user is served by different base stations according to its geographical position. The user trajectory is determined by the serving base stations a→c→d→e→f. This approach predicts the location at a large granularity, because the serving area of a base station only provides poor spatial resolution. In certain areas where the user may be served by two base stations, oscillations →c→d→c->d-> may occur with this approach.

Alternatively, a trace is broken into segments based on the user velocity $v$ and yaw angle $\varphi$, known as $v\varphi$-representation. A clustering algorithm allows defining a trace as a sequence of segments. This approach achieves a higher spatial resolution. However, the clustering algorithm is entirely based on the historical data about the user, while the constraints caused by the road and traffic condition are not utilized. Thus, this approach may quickly lead to over-decomposition, consequently increasing computational complexity.

In addition, prior art methods only cover the prediction of the user's next locations, while ignoring the prediction of the important parameters arrival time and travel time. Also, prior art either only predicts a single next position of the user or assumes a fixed prediction horizon, i.e. the time window for which the trajectory prediction is obtained is not adjusted to the current state of the user and its environment.

SUMMARY OF THE INVENTION

It is an object of the invention to provide a method and apparatus for predicting a user trajectory, i.e. predicting the movement of a user not suffering from the above mentioned drawbacks.

According to one embodiment, a method for operating a central unit connected to a wireless communication network is proposed. The method predicts trajectories of mobile users, i.e. movement of users. Road maps are converted into a network graph. In one embodiment, road maps are data representing possible user trajectories including spatial constraints for these trajectories. Street crossings are converted to nodes of the network graph. Roads connecting the street crossings are converted to edges of the network graph. In one embodiment, all street crossing and roads are converted into the network graph. In one embodiment, only major street crossings and corresponding roads are converted into the network graph. In one embodiment, the edges of the network graph also reflect constraints given by traffic rules, i.e. one way roads etc. Historical data of movements of at least one user is collected by the method. Thus, it is analyzed if which edges and nodes a given user has passed in the past and corresponding travelling times are stored. Further, data related to support information is collected. Support information is to be understood as information about circumstances which affect the movement of the user, but is not directly dependent on the user itself. For example, support information is e.g. speed limits. Speed limits are given by the environment and directly affect the movement of the user, but cannot be influenced by the user itself. Other support information is information about traffic lights, which also directly affect the movement of the user. Further support information is derivable from the road maps, e.g. road condition, road course and the like. User positioning parameters and traffic conditions are also examples of support information. A movement of the at least one user is predicted by using both, historical data about the movements of the at least one user and support information that has been collected. The method has the advantage that by using support information, the prediction accuracy and the probability of correct prediction is enhanced significantly compared to the prediction of user trajectory only based on historical information.

In one embodiment, the movement of the user is modeled as a set of nodes and corresponding time stamps. Thus, historical data are modeled this way. Also the predicted user trajectory is described by nodes and corresponding time stamps.

In one embodiment, the prediction of the movement of the at least one user comprises predicting the movement of the at least one user between two neighboring nodes and predicting the movement of the at least one user between multiple consecutive nodes. This way, long-term trajectory prediction at a large granularity is included into the prediction process by considering multiple consecutive nodes. At the same time, short-term trajectory prediction at an edge between two neighboring nodes is also included into the prediction process. This enhances the accuracy of the prediction process.

In one embodiment, predicting the movement of the user between multiple consecutive nodes, i.e. long-term trajectory prediction, is based on historical movement data between multiple consecutive nodes of the at least one user. Further, predicting the movement of the at least one user between two neighboring nodes is based on historical movement data between multiple consecutive nodes of the at least one user, historical movement data between the two neighboring nodes of the at least one user and historical movement data between the two neighboring nodes of other users. For the short-term trajectory prediction, multiple sources of information are used in order to enhance accuracy of the short-term trajectory prediction. For the long-term trajectory prediction, the prediction process is based on the at least one users historical data in order to reduce the complexity. By combining the short-term trajectory prediction and the long-term trajectory prediction, all information is used with manageable complexity of the whole prediction process.

In one embodiment, for predicting the movement of the user between two neighboring nodes, an average travelling time period for the at least one user between the two neighboring nodes is extracted from the collected data.

In one embodiment, Markov Models are used for predicting a movement of at least one user between multiple consecutive nodes based on the average traveling time of the at least one user between two neighboring nodes. In one embodiment, in order to decrease complexity, semi Markov Models are used instead.

In one embodiment, predicting the movement of the at least user between two neighboring nodes is based on historical movement data between the two neighboring nodes of the at least one user.

The historical movement data between the two neighboring nodes of the at least one user is selected according to the following scheme:

In case the user is moving from one node to another neighboring node, historical time stamped data of a user on an edge between the two neighboring nodes is used. In case the user stops at an edge between the two neighboring nodes, at least one of a user mobility pattern and abnormal stay information from other users are used. E.g. if there is a traffic jam on an edge, this information is derived from information about other users, because they are most likely also affected by the traffic jam. In one embodiment, abnormal stay information is information about unexpected waiting times. In case the user stops at a node, traffic conditions are used. If e.g. at a street crossing a traffic light is red, the user has to stop. This information can be extracted from the support information, e.g. from information about traffic lights.

In one embodiment, a central unit connected to a wireless communication network is proposed. In one embodiment, the central unit is integrated in a base station. In one embodiment, the central unit is a separate unit. The central unit comprises a network graph generator for converting a network graph from road maps, building plans or similar charts. Road maps are converted into a network graph by the network graph generator. Street crossings are converted to nodes of the network graph. Roads connecting the street crossings are converted to edges of the network graph. In one embodiment, all street crossing and roads are converted into the network graph. In one embodiment, only major street crossings and corresponding roads are converted into the network graph. In one embodiment, the edges of the network graph also reflect constraints given by traffic rules, i.e. one way roads etc. The central unit further comprises a first receiver for receiving and collecting historical data of movements of at least one user. The central unit further comprises a second receiver for receiving and collecting support information. Support information is to be understood as information about circumstances which affect the movement of the user, but is not directly dependent on the user itself. For example, support information is e.g. speed limits. Speed limits are given by the environment and directly affect the movement of the user, but cannot be influenced by the user itself. Other support information is information about traffic lights, which also directly affect the movement of the user. Further support information is derivable from the road maps, e.g. road condition, road course and the like. User positioning parameters and traffic conditions are also examples of support information. The central unit further comprises a predictor for predicting a movement of a user based on the collected information.

In one embodiment, the central unit comprises a first modeler for modeling the movement of a user between multiple consecutive nodes. Further, the central unit comprises a second modeler for modeling the movement of a user between two neighboring nodes. Further, the central unit comprises a third modeler for modeling the movement of other users between two neighboring nodes.

In one embodiment, the predictor of the central unit comprises a first prediction unit for predicting a movement of a user between multiple consecutive nodes. Further, the predictor comprises a second prediction unit for predicting a movement of a user between two neighboring nodes. The output of the first prediction unit and the output of the second prediction unit are combined to generate to predicted movement of the at least one user. The first prediction unit is connected to the output of the first modeler and thus receives information regarding the at least one user of large granularity. The outputs of the first, second and third modelers are connected to the second prediction unit. The second prediction unit thus receives information regarding the at least one user of large granularity, information regarding the at least one user of small granularity and information regarding other users of small granularity.

In one embodiment, a wireless communication network is proposed. The wireless communication network comprises at least one base station and at least one mobile user (User Equipment). Further, the wireless communication network comprises a central unit as described above. In one embodiment, the central unit is integrated in the base station. In one embodiment, the central unit is a separate device. The central unit performs a method as described above.

Further advantageous features of the embodiments of the invention are defined and are described in the following detailed description.

BRIEF DESCRIPTION OF THE DRAWINGS

Some embodiments of apparatus and methods in accordance with embodiments of the present invention are now described, by way of examples only, and with reference to the accompanying drawings, in which:

Fig. 1    discloses a wireless communication network as known in the art

Fig. 2    discloses a wireless communication network according to the invention

Fig. 3    schematically depicts a central unit according to the invention

Fig. 4    schematically depicts a network graph according to the invention

Fig. 5    schematically depicts how travelling time between two network nodes is derived according to the invention

Fig. 6    schematically depicts a suffix tree according to the invention

Fig. 7    schematically depicts different travelling states a mobile user may have between two neighboring nodes

DETAILED DESCRIPTION OF PREFERRED EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions.

Moreover, all statements herein reciting principles, aspects, and embodiments of the invention, as well as specific examples thereof, are intended to encompass equivalents thereof.

Fig. 2 discloses a wireless communication network 20 including at least one base station 21, at least one mobile user 23 and at least one central unit 22. In one embodiment, the central unit 22 is included in the base station 21. In one embodiment, the central unit 22 is a separate unit.

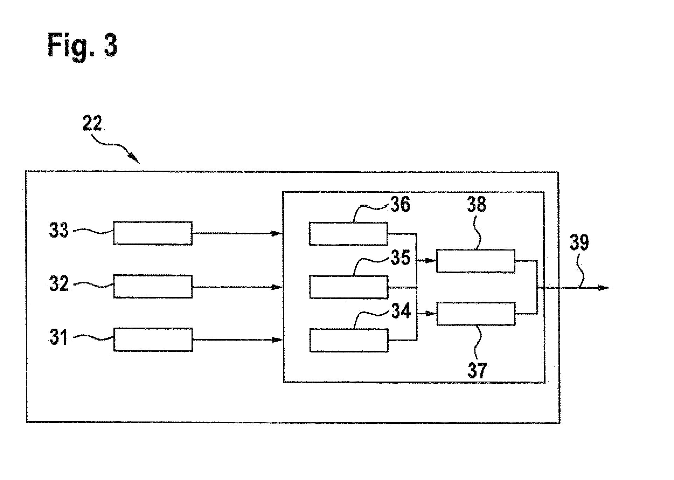

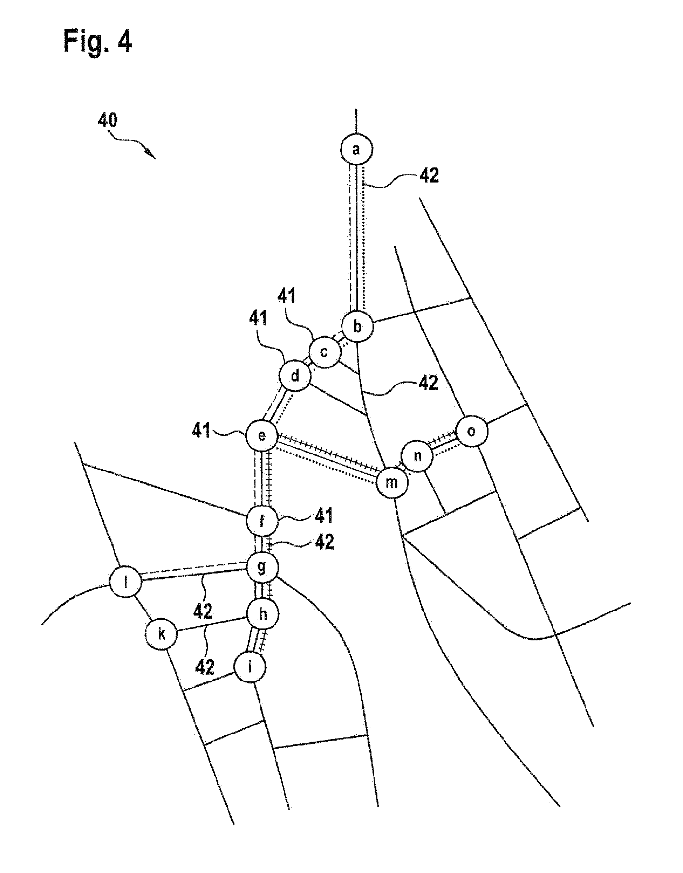

Fig. 3 schematically depicts a central unit 22 in a wireless network 20. The central unit 22 comprises a network graph generator 31 for converting road maps into a network graph 40. Street crossings are converted to nodes 41 of the network graph 40. Roads connecting the street crossings are converted to edges 42 of the network graph 40. In one embodiment, all street crossings and roads are converted into the network graph 40. In one embodiment, only major street crossings and corresponding roads are converted into the network graph 40. In one embodiment, the edges of the network graph 40 also reflect constraints given by traffic rules, i.e. one way roads etc. The network graph 40 comprises a finite set $S := \{1,...,S\}$ of nodes 41 and a finite set $\mathcal{L} := \{1,...,L\}$ of edges 42. Road maps are available in many shapes, sizes and scales. Small street maps are used for describing trajectories in dense urban area while the large scale highway maps are used for describing trajectories with higher speed in the less-dense suburban area. By generating the network graph 40, information of differently shaped road maps is systematically merged together in a network graph 40. An example of the converted network graph 40 from a sub-region the road map is depicted in Fig. 4. Exemplarily, three user trajectories are indicated as dotted line, dashed line and crossed line. The first user trajectory (dotted line) passes the nodes 41 a, b, c, d, e, m, n and o. The second user trajectory (dashed line) passes the nodes 41 a, b, c, d, e, f, g and 1. The third user trajectory (crossed line) passes the nodes 41 o, n, m, e, f, g, h and i.

The central unit 22 as depicted in Fig. 3 further comprises a first receiver 32 for receiving and collecting historical data of at least one mobile user 23. The historical data is data describing a route $\mathcal{R}_k$ of the at least one mobile user k in the past. In one embodiment, the route is described by a sequence of time stamped nodes 41, i.e. vertices or street crossings. Given a finite set of mobile users $\mathcal{K} := \{k : k = 1,..., K\}$ served by the central unit 22, a route $\mathcal{R}_k$ of the $k^{\text{th}}$ mobile user consists of a sequence of nodes $\{s_n^{(k)} \in \mathcal{S} : n = 0,1,2,...\}$ with associated time stamps $\{t_n^{(k)} : n = 0,1,2,...\}$. The route is described as follows: $\mathcal{R}_k := \{\mathbf{r}_n^{(k)} = (s_n^{(k)}, t_n^{(k)}) : n = 0,1,2,...\}$ for each $k \in \mathcal{K}$.

The first receiver 32 further receives and collects for most or all edges of the network graph 42, i.e. for most or all connections between two successive nodes 41, the trajectory data of multiple mobile users passing through the edge 42. In one embodiment, trajectory data of all mobile users passing through the edge 42 are collected. In one embodiment, the trajectory data are expressed as a sequence of the time-stamped locations.

For the $1^{\text{th}}$ edge, a trajectory collection of all the time-stamped locations is denoted by:

$$\mathcal{Z}_l := \{\mathbf{z}_m^{(l)} = (\mathbf{x}_m^{(l)}, t_m^{(l)}) : m = 0,1,2,...\} \text{ for each } l \in \mathcal{L},$$

where $\mathbf{x}_m^{(l)}$ is the localization data defined either as a two dimensional vector including the latitude and longitude or as a three dimensional vector including the latitude, longitude, and altitude.

Further, as depicted in Fig. 3, the central unit 22 includes a second receiver 33 for receiving and collecting support information. Support information is e.g. information derivable from road maps, speed limits, information about traffic lights, user positioning parameters and traffic conditions. Side information may be information relevant to determine how fast a mobile user 23 can drive on a street given by the circumstances.

Further, the central unit 22 comprises a movement prediction unit consisting of a first modeler 36, a second modeler 35 and a third modeler 34. The first modeler 36 is for modeling movements of an individual mobile user 23 between multiple consecutive nodes 41. So to say, the first modeler 36 takes information about a longer historical route of multiple nodes 41 into account when generating a first trajectory model. In one embodiment, Markov Models are used to model quasi-deterministic movements of an individual mobile user 23 between multiple consecutive nodes 41. The movement prediction unit of the central unit 22 further comprises a second modeler 35 for modeling movements of an individual mobile user 23 between two neighboring nodes 41. So to say, the second modeler 35 takes information about a short historical route of an individual mobile user 23, i.e. a single edge 42 between two neighboring nodes 41, into account when generating a second trajectory model. The movement prediction unit of the central unit 22 further comprises a third modeler 34 for modeling the movements of other users between two neighboring nodes 41. So to say, the third modeler 34 takes information about a short historical route of other mobile users 23, i.e. a single edge 42 between two neighboring nodes 41, into account when generating a third trajectory model. The model generated by the first modeler 36 is provided to a first prediction unit 38 and to a second prediction unit 37. The models generated by the second modeler 35 and the third modeler 34 are provided to a second prediction unit 37.

The first prediction unit 38 is for predicting a movement of a mobile user 23 between multiple consecutive nodes 41. The predicted movement of a mobile user 23 between multiple consecutive nodes 41 is used as to a long-term trajectory prediction at large granularity. In addition, it is used as side information for predicting the short-term trajectory of a mobile user 23, i.e. the movement of a mobile user between two neighboring nodes 41, as described in more detail below. Such side information is, e.g. the probability of turning of a mobile user 23.

Historical data describing a route $\mathcal{R}_k$ of at least one mobile user k in the past, i.e. individual node transition record, are collected from time $t_0$ up to time $t \geq t_0$. During the time period $[t_0, t]$, the mobile user 23 passes through $N >$

0 nodes $\{s_n^{(k)} \in \mathcal{S} : n = 0,1,..., N\}$.

The hitting time from one node 41 to the other may shift, but the distribution of the traveling time between the two nodes 41 usually remains stationary. The time-stamped sequence describing the route $\mathcal{R}_k := \{(s_n^{(k)}, t_n^{(k)}) : n = 0,1,..., N\}$ is expressed as a sequence associated with the traveling time periods,

$$\widetilde{\mathcal{R}}_k := \{\widetilde{\mathbf{r}}_n^{(k)} = (s_n^{(k)}, \tau_n^{(k)}) : n = 0,1,..., N-1\},$$

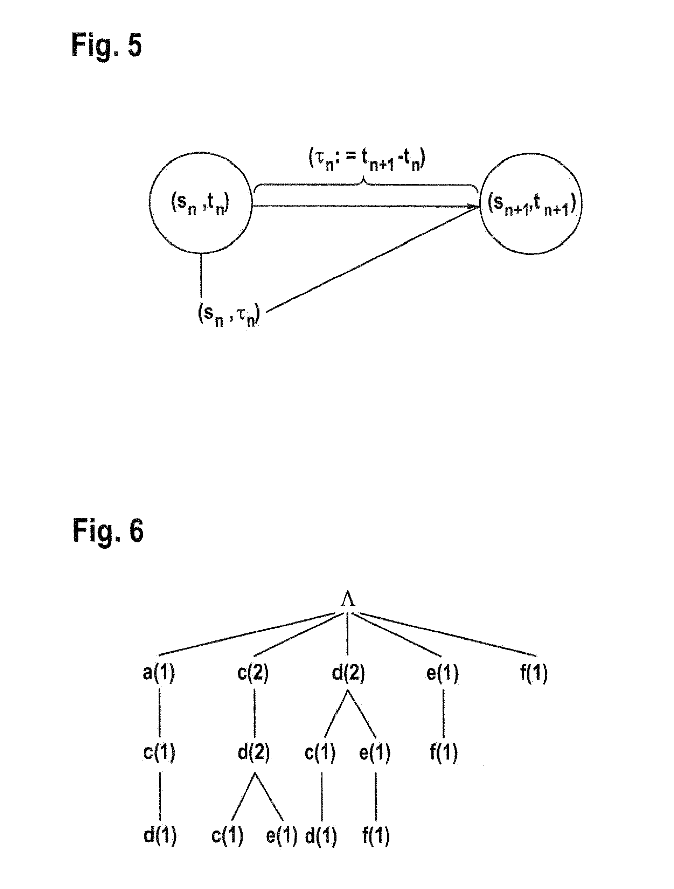

wherein $\tau_n^{(k)} := t_{n+1}^{(k)} - t_n^{(k)}$ denotes the time difference between the hitting time for the *n*-th node 41 and the hitting time for the (n+1)-th node 41. This concept is schematically depicted in Fig. 5.

In one embodiment, the predication of movement of a mobile user 23 between multiple consecutive nodes 41 (long-term trajectory prediction) is based on Markov Models such as data compression algorithms, e.g. including PPM and LZ78, or Hidden Markov Models. A conditional probability $P(\widetilde{\mathbf{r}}_{n+1}^{(k)} \mid \widetilde{\mathbf{r}}_0^{(k)},..., \widetilde{\mathbf{r}}_n^{(k)})$ is inferred from the Markov Models.

In one embodiment, the data compression algorithm, e.g. PPM or LZ78 is used to construct a suffix tree and $P(\widetilde{\mathbf{r}}_{n+1}^{(k)} \mid \widetilde{\mathbf{r}}_0^{(k)},..., \widetilde{\mathbf{r}}_n^{(k)})$ is approximated by $P(\widetilde{\mathbf{r}}_{n+1}^{(k)} \mid \widetilde{\mathbf{r}}_{n-N'}^{(k)},..., \widetilde{\mathbf{r}}_n^{(k)})$. *N'* is the variable order of the Markov Model. A suffix tree is depicted in Fig. 6.

In one embodiment, the model complexity is decreased by using a semi-Markov Model. In this case, the traveling time $\tau_{n+1}^{(k)}$ depends only on the node $s_{n+1}^{(k)}$, while the node $s_{n+1}^{(k)}$ depends on the previous node states $(s_{n-N'}^{(k)},..., s_n^{(k)})$. $P(s_{n+1}^{(k)} \mid s_{n-N'}^{(k)},..., s_n^{(k)})$ and $P(\tau_{n+1}^{(k)} \mid s_{n+1}^{(k)})$ are derived from the transition probability and the emission probability parameters. From that, the probability $P(\widetilde{\mathbf{r}}_{n+1}^{(k)} \mid \widetilde{\mathbf{r}}_0^{(k)},..., \widetilde{\mathbf{r}}_n^{(k)})$ is obtained.

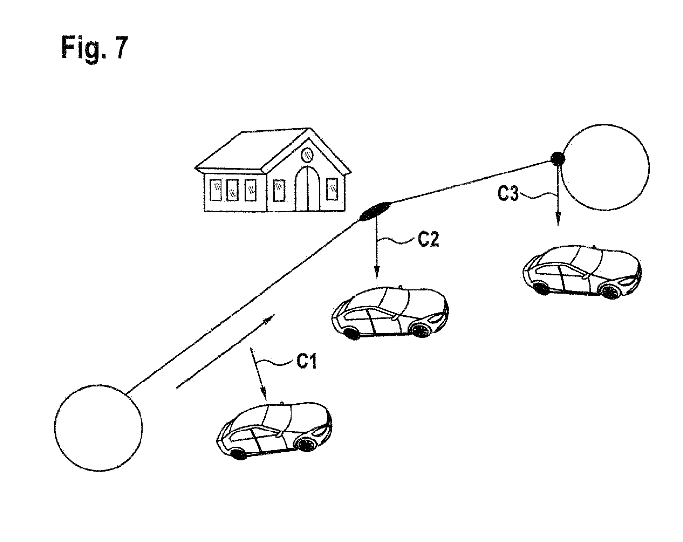

The second prediction unit 37 is for predicting a movement of a mobile user 23 between two neighboring nodes 41. The predicted movement of a mobile user 23 between two neighboring nodes 41 is used as to a short-term trajectory prediction, i.e. the predicted movement describes a movement of a mobile user 23 at an edge 42 between two neighboring nodes 41. The movement of a mobile user 23 between two neighboring nodes 41 is classified in three cases as given in Fig. 7

In the first case C1, a mobile user 23 is moving on an edge 42 between two neighboring nodes 41 from one node to the other.

In the second case C2, a mobile user 23 stops on an edge 42 between two neighboring nodes 41 while move from one node 41 in the direction of the other node 41.

In the third case C3, a mobile user 23 arrives at a node 41 and makes a transition or waits for making a transition towards a neighboring node 41.

In the first case C1, where a mobile user is moving from one node 41 to a neighboring node 41, the trajectory model is derived from historical time-stamped localization data of the mobile user 23. This data is reported periodically by the mobile user 23 with the time interval $\tau$. The mobile users 23 trajectory is highly time-correlated. If a mobile user 23 is accelerating at time *t*, it is very likely that the mobile user 23 will continue to accelerate at time $t+\tau$. Moreover, the mobile users 23 movement is mainly self-dependent, i.e. is mainly depending on the driver's driving pattern. By using the historical time-stamped localization data of the mobile user 23 and using time series or function regression methods, the future location and velocity $(\hat{\mathbf{x}}_{t+\tau}, \hat{\mathbf{v}}_{t+\tau})$ is predicted based on the historical data $\{(\mathbf{x}_{t-i\tau}, \mathbf{v}_{t-i\tau}) : i = 0,1,...,,M'\}$. $\mathbf{v}_t = v_t (\cos\varphi_t, \sin\varphi_t)^T$ is a velocity modeled in the two dimensional space and $t-M'\tau \geq t_n$ for a mobile user 23 at an edge 42 between the *n*-th and the *n*+1-th node 41. The velocity is estimated by

$$\hat{\mathbf{v}}_{t-\tau} = |\mathbf{x}_t - \mathbf{x}_{t-\tau}| / \tau.$$

Based on the prediction of ($\mathbf{x}_{t+\tau}$, $\mathbf{v}_{t+\tau}$), a multi-step prediction is iteratively made

$$\hat{\mathbf{x}}_{t+i\tau} = \hat{\mathbf{x}}_{t+(i-1)\tau} + \hat{\mathbf{v}}_{t+(i-1)\tau} \cdot \tau \quad \text{for} \quad t + i\tau \leq \hat{t}_{n+1} .$$

In the second case, where a mobile user 23 stops on an edge 42 between two neighboring nodes 41 while moving from one node 41 in the direction of the other node 41, the traveling/staying time on an edge 42 is predicted by the transition probability $P\big(\widetilde{\mathbf{r}}_{n+1}^{(k)} \mid \widetilde{\mathbf{r}}_0^{(k)}, ..., \widetilde{\mathbf{r}}_n^{(k)}\big)$. In this case, $\widetilde{\mathbf{r}}_{n+1}^{(k)} = \big(s_{n+1}^{(k)}, \tau_{n+1}^{(k)}\big)$ includes the neighboring node 41 and the traveling time or the staying time in the next edge 42.

There are mainly two reasons for the stop. The first one is a normal stay at some location according to the mobile users 23 mobility pattern. The staying time is predicted from the long-term prediction made by the first predictor 38 as described above. This may e.g. be the case when a user arrives at its destination. The second reason is an abnormal stay, which is caused by traffic jam. The staying time in this case is predicted based on moving data provided by other mobile users 23 that passed through the same edge 42 at a previous time period.

For the first reason, the predicted staying time $\hat{t}_n$ at the current edge 42 is used as the constraint. For the second reason, the group staying time is predicted from data as described below.

In the third case C3, where a mobile user 23 arrives at a node 41 and makes a transition or waits for making a transition towards a neighboring node 41, the trajectory model is derived from historical time-stamped localization data of the other mobile users 23 that passed through the same edge 42 between two neighboring nodes41. I.e. for the *l*-th edge 42,

$$\mathcal{Z}_l := \{\mathbf{z}_m^{(l)} = (\mathbf{x}_m^{(l)}, t_m^{(l)}) : m = 0,1,2,...\} .$$

The waiting time at the node 41, e.g. based on traffic condition due to the traffic lights, is predicted from the historical time-stamped localization data $z_l$, while the transition probability is provided by the P.

The trajectory prediction result is a combination of the output of the first prediction unit 38 and the output of the second prediction unit 37 and is provided at the output 39 of the central unit 22.

In one embodiment, the central unit 22 is implemented in a distributed way, where each network entity such as base stations 21 collect the data and compute the trajectory prediction distributedly for the users appearing at the nodes 41 and the edges 42 within its serving area.

The trajectory prediction as described above provides a fundamental function for network optimization and location-based services. By accurately predicting the mobile users 23 trajectory, handover failures are avoided, coverage is improved, e.g. by tilting or beamforming according to a mobile users 23 further location and wireless channel resources are saved by pre-loading data, i.e. so-called anticipatory buffering or caching and more efficient resource allocation. In the context of location-based services, being aware of where the user likely will be, enables completely new forms of navigation applications, guidance systems and location-based advertising.

The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the functions may be provided, without limitation, by digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

**Claims**

1. Method for operating a central unit connected to a wireless communication network for predicting trajectories of mobile users, comprising the steps:

   - converting road maps to a network graph,
   - collecting historical data of movements of at least one user,
   - collecting data related to support information,

- predicting a movement of the at least one user based on the collected information.

2. Method for operating a central unit connected to a wireless communication network according to claim 1, wherein street crossings are converted to nodes of the network graphs and roads connecting street crossings are converted to edges of the network graph.

3. Method for operating a central unit connected to a wireless communication network according to one of claims 1 and 2, wherein the movement of the user is modeled as a set of nodes and corresponding time stamps.

4. Method for operating a central unit connected to a wireless communication network according to one of claims 1 to 3, wherein support information is at least one of information derivable from the road maps, speed limits, user positioning parameters and traffic conditions.

5. Method for operating a central unit connected to a wireless communication network according to one of claims 1 to 4, wherein the step of predicting a movement of the at least one user based on the collected information further comprises:

   - predicting the movement of the at least one user between two neighboring nodes, and
   - predicting the movement of the at least one user between multiple consecutive nodes.

6. Method for operating a central unit connected to a wireless communication network according to claim 5, wherein predicting the movement of the at least one user between multiple consecutive nodes is based on historical movement data between multiple consecutive nodes of the at least one user and predicting the movement of the at least one user between two neighboring nodes is based on historical movement data between multiple consecutive nodes of the at least one user, historical movement data between the two neighboring nodes of the at least one user and historical movement data between the two neighboring nodes of other users.

7. Method for operating a central unit connected to a wireless communication network according to claim 5 or 6, wherein the step of predicting the movement of the user between two neighboring nodes further comprises the step:

   extracting average travelling time period for the at least one user between the two neighboring nodes from the collected data.

8. Method for operating a central unit connected to a wireless communication network according to one of claims 1 to 7, wherein the step of predicting the movement of the at least one user based on the collected information further comprises:

   - using Markov Models for predicting a movement of at least one user between multiple consecutive nodes based on the average traveling time of the at least one user between two neighboring nodes.

9. Method for operating a central unit connected to a wireless communication network according to one of claims 1 to 8, wherein the step of predicting the movement of the at least one user between two neighboring nodes is based on:

   - using historical time stamped data of a user on an edge between two neighboring nodes in case the user is moving from one node to another node,
   - using at least one of a user mobility pattern and an abnormal stay information from other users in case the user stops at an edge, and
   - using traffic conditions in case the user stops at a node.

10. Central unit connected to a wireless communication network comprising:

   - a network graph generator for converting a network graph from a road map, a building plans, or a similar chart,
   - a first receiver for receiving and collecting historical data of movements of at least one user,
   - a second receiver for receiving and collecting support information, and
   - a predictor for predicting a movement of a user based on the collected information.

11. Central unit connected to a wireless communication network according to claim 10, further comprising:

- a first modeler for modeling the movement of a user between multiple consecutive nodes,
- a second modeler for modeling the movement of a user between two neighboring nodes, and
- a third modeler for modeling the movement of other users between two neighboring nodes.

12. Central unit connected to a wireless communication network according to claim 10 or 11, wherein the predictor comprises a first prediction unit for predicting a movement of a user between multiple consecutive nodes and a second prediction unit for predicting a movement of a user between two neighboring nodes.

13. Central unit connected to a wireless communication network according to claim 13, wherein the first prediction unit is connected to the output of the first modeler and the second prediction unit is connected to the outputs of the first, second and third modelers.

14. Wireless communication network, comprising:

- at least one base station,
- at least one mobile user, and
- at least one central unit according to one of claims 10-13.

## Fig. 1

## Fig. 2

## Fig. 3

# Fig. 4

# Fig. 5

$$(\tau_n := t_{n+1} - t_n)$$

$(s_n, t_n)$

$(s_{n+1}, t_{n+1})$

$(s_n, \tau_n)$

# Fig. 6

$\Lambda$

a(1)　　c(2)　　d(2)　　e(1)　　f(1)

c(1)　　d(2)　　c(1)　e(1)　　f(1)

d(1)　c(1)　e(1) d(1)　f(1)

Fig. 7

**Europäisches Patentamt**

**European Patent Office**

**Office européen des brevets**

# EUROPEAN SEARCH REPORT

Application Number

EP 15 30 5428

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/062790 A1 (LETZ DOMINIC [DE] ET AL) 6 March 2014 (2014-03-06)<br>* abstract *<br>* figures 1,2 *<br>* paragraphs [0001], [0003], [0027] - [0038], [0040], [0045], [0050] - [0052], [0054], [0055], [0058], [0061], [0063], [0064], [0066] *<br>* paragraphs [0072], [0074], [0076], [0078], [0080] *<br>* claims 1-4,8,10,11,18,20 *<br>----- | 1-14 | INV.<br>G08G1/01<br>H04W4/04 |
| X | JIDONG CHEN ET AL: "Modeling and Predicting Future Trajectories of Moving Objects in a Constrained Network",<br>MOBILE DATA MANAGEMENT, 2006. MDM 2006. 7TH INTERNATIONAL CONFERENCE O N NARA, JAPAN 10-12 MAY 2006, PISCATAWAY, NJ, USA,IEEE,<br>10 May 2006 (2006-05-10), pages 156-156, XP010918098,<br>DOI: 10.1109/MDM.2006.107<br>ISBN: 978-0-7695-2526-6<br>* the whole document *<br>----- | 1-14 | |
| A | US 2010/323715 A1 (WINTERS JACK H [US]) 23 December 2010 (2010-12-23)<br>* abstract *<br>* figures 1,3 *<br>* paragraphs [0013] - [0017], [0020] - [0026], [0034] - [0036], [0045], [0046], [0048], [0050], [0052], [0069], [0077], [0084], [0085] *<br>* claims 1-6,9-11,15-17 *<br>----- | 1-14 | TECHNICAL FIELDS SEARCHED (IPC)<br>G08G<br>H04W |

-/--

The present search report has been drawn up for all claims

| Place of search | Date of completion of the search | Examiner |
|---|---|---|
| The Hague | 10 September 2015 | Quartier, Frank |

Europäisches
Patentamt

European
Patent Office

Office européen
des brevets

# EUROPEAN SEARCH REPORT

Application Number

EP 15 30 5428

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GB 2 511 860 A (VODAFONE IP LICENSING LTD [GB]) 17 September 2014 (2014-09-17)<br>* abstract *<br>* figures 1-3 *<br>* page 2, line 28 - page 3, line 10 *<br>* page 3, line 32 - page 4, line 27 *<br>* page 8, lines 5-27 *<br>* page 10, lines 17-30 *<br>* claims 1,2,5-12,23 *<br>----- | 1-14 | |
| A | US 2007/208492 A1 (DOWNS OLIVER B [US] ET AL) 6 September 2007 (2007-09-06)<br>* abstract *<br>* figures 1,3 *<br>* paragraphs [0013], [0014], [0016], [0019] - [0021], [0026], [0087], [0088] *<br>* claims 1,3-9,11,12,14-17,19-25 *<br>----- | 1-14 | |

TECHNICAL FIELDS
SEARCHED (IPC)

The present search report has been drawn up for all claims

| Place of search | Date of completion of the search | Examiner |
|---|---|---|
| The Hague | 10 September 2015 | Quartier, Frank |

EPO FORM 1503 03.82 (P04C01)

## ANNEX TO THE EUROPEAN SEARCH REPORT
## ON EUROPEAN PATENT APPLICATION NO.

EP 15 30 5428

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2015

| Patent document cited in search report | | Publication date | Patent family member(s) | | Publication date |
|---|---|---|---|---|---|
| US 2014062790 | A1 | 06-03-2014 | EP | 2901721 A1 | 05-08-2015 |
| | | | US | 2014062790 A1 | 06-03-2014 |
| | | | WO | 2014032819 A1 | 06-03-2014 |
| US 2010323715 | A1 | 23-12-2010 | NONE | | |
| GB 2511860 | A | 17-09-2014 | GB | 2511860 A | 17-09-2014 |
| | | | WO | 2014140525 A1 | 18-09-2014 |
| | | | WO | 2014140526 A1 | 18-09-2014 |
| US 2007208492 | A1 | 06-09-2007 | AU | 2007224239 A1 | 13-09-2007 |
| | | | CN | 101438334 A | 20-05-2009 |
| | | | EP | 1999735 A2 | 10-12-2008 |
| | | | JP | 2009529186 A | 13-08-2009 |
| | | | US | 2007208492 A1 | 06-09-2007 |
| | | | US | 2011082636 A1 | 07-04-2011 |
| | | | US | 2012136561 A1 | 31-05-2012 |
| | | | WO | 2007103123 A2 | 13-09-2007 |

EPO FORM P0459

For more details about this annex : see Official Journal of the European Patent Office, No. 12/82